# EUROPEAN PATENT APPLICATION

(11) **EP 4 498 281 A1**
(43) Date of publication of application: **29.01.2025**
(21) Application number: 24190797.1
(22) Date of filing: 25.07.2024
(51) Int. Cl.: G06K 15/02, B41J 2/21, H04N 1/60

(54) **IMAGE PROCESSING APPARATUS, IMAGE PROCESSING METHOD, PROGRAM, AND STORAGE MEDIUM**

(30) Priority: 25.07.2023 JP 2023121143
(71) Applicant: CANON KABUSHIKI KAISHA, Tokyo 146-8501 (JP)
(72) Inventor: FUJIMOTO, Momoka, Tokyo, 146-8501 (JP)
(74) Representative: Canon Europe Limited

(57) **Abstract**

An image processing apparatus is configured to acquire image data acquired by reading an image formed on a recording medium using a recording element for ejecting an ink and to generate data representing the density characteristic of the recording element, based on an inverted image acquired by inverting densities in the image represented by the image data.

## Description

### TECHNICAL FIELD

The present disclosure relates to technologies for improving image quality in inkjet recording.

### BACKGROUND

### Description of the Related Art

In the field of inkjet recording, errors sometimes occur in the mounting positions of recording heads or in the relative mounting positions among multiple recording heads. These errors may cause misplacements in ink drop positions on recording media, which can lead to degradations in recording quality. Considering an inkjet recording head, ink ejection characteristics such as ink ejection volume may vary among nozzles due to manufacturing errors or because of deterioration over time. These variations may result in non-uniform densities of the ink, which can also lead to degradations in recording quality.

To mitigate such degradations in recording quality, techniques using specialized print patterns are known. For example, Japanese Patent Laid-Open No. 2001-310535 discloses a method called head shading. In head shading, a print pattern is read using a reading device such as a scanner, and the densities, indicated by the image data, corresponding to individual ink ejection orifices, are adjusted to compensate for the non-uniform recording densities of the ink ejection orifices. Japanese Patent Laid-Open No. 2022-185430 discloses a technique for calculating a compensation table for white ink, which is difficult to detect, by consecutively printing a pattern illustrated with white ink ejected onto a paper surface and a pattern illustrated with coloured ink superimposed on the white ink and detecting these patterns.

However, with the technique described in Japanese Patent Laid-Open No. 2001-310535, it is difficult for reading devices to detect patterns printed with recording agents such as white ink or transparent reaction liquid, which appear with low colour contrast against printing paper. With the technique described in Japanese Patent Laid-Open No. 2022-185430, increased print patterns lead to higher printing costs due to factors such as paper and ink consumption and device usage time.

### SUMMARY

The present disclosure provides a process for performing density non-uniformity compensation for recording agents that may hinder the detection of print patterns, without increasing printing costs.

The present disclosure in a first aspect provides an image processing apparatus comprising: an acquisition means configured to acquire image data acquired by reading an image formed on a recording medium, wherein the image is formed using a recording element for ejecting an ink; and a generation means configured to generate data representing a density characteristic of the recording element, the data is generated based on an inverted image which is acquired by inverting densities in the image represented by the image data.

According to a second aspect there is provided an image processing method comprising: an acquisition step of acquiring image data acquired by reading an image formed on a recording medium, wherein the image is formed using a recording element for ejecting an ink; and a generation step of generating data representing a density characteristic of the recording element, wherein the data is generated based on an inverted image which is acquired by inverting densities in the image represented by the image data.

According to a third aspect there is provided a non-transitory computer-readable storage medium storing instructions that, when executed by a computer, cause the computer to perform an image processing method, the image processing method comprising: an acquisition step of acquiring image data acquired by reading an image formed on a recording medium, wherein the image is formed using a recording element for ejecting an ink; and a generation step of generating data representing a density characteristic of the recording element, wherein the data is generated based on an inverted image which is acquired by inverting densities in the image represented by the image data.

According to the above aspects, inverted images can be used to acquire image data (e.g., gradation data corresponding to the nozzles for dispensing a type of recording media, such as white ink). However, a pre-inverted image may be used to acquire the image data, while an inverted image can be used to detect nozzle position marks. When the image data is detectable, but the nozzle position mark region is too small to detect, the inverted image and the pre-inverted image can be used separately. Specifically, a user may select whether the inverted image or the pre-inverted image is to be used for print pattern detection (e.g., the user may use the inverted image for some regions and the pre-inverted image for the remaining regions). In this way, the present disclosure enables density non-uniformity compensation for recording agents that may hinder the detection of print patterns, without increasing printing costs.

Optional features will now be set out. These are applicable singly or in any combination with any aspect of the disclosure.

A region printed with the ink on the recording medium may exhibit low contrast compared to a region not printed with the ink on the recording medium (e.g., the contrast of the region printed with the ink may be lower than the contrast of a region not printed with the ink). The ink may be an achromatic ink. The ink may be a white ink, or a reaction liquid, or a clear ink.

The generation means may be configured to generate a compensation table for performing compensation to reduce non-uniform densities. The compensation table may be generated based on the data representing the density characteristic of the recording element.

The image formed on the recording medium may include a gradation region and/or a mark region. The gradation region may comprise a variety of densities (e.g., a plurality of different densities). The mark region may be configured for specifying a position of the recording element.

The image processing apparatus may comprise a calculation means configured to calculate a pixel-value difference between the region printed with the ink and the region not printed with the ink in the image represented by the image data. The generation means may be configured to invert densities in the image by calculating a difference between the calculated pixel-value difference and a maximum possible pixel value that corresponds to a bit count in the image data.

The image processing apparatus may comprise a detection means configured to detect a mark region for specifying a position of the recording element in the inverted image. The generation means may be configured to generate the data representing the density characteristic, based on the detected mark region.

The image processing apparatus may comprise a compensation means configured to multiply a pixel value in the inverted image by a coefficient that facilitates detection of the mark region.

According to a fourth aspect there is provided a program configured to cause a computer to operate as the image processing apparatus according to the first aspect. Any feature in one aspect of the disclosure may be applied to other aspects of the disclosure, in any appropriate combination. In particular, method aspects may be applied to apparatus/device/unit aspects, and vice versa.

It will be understood that features implemented in hardware may be implemented in software, and vice versa. Any reference to software and hardware features herein should be construed accordingly. For example, in accordance with other aspects of the disclosure, there are provided a computer program comprising instructions which, when the program is executed by one or more processing units, cause the one or more processing units to carry out the method of any aspect or example described above and a computer readable storage medium carrying the computer program.

The preceding summary is provided for purposes of summarising some examples to provide a basic understanding of aspects of the subject matter described herein. Accordingly, the above-described features should not be construed to narrow the scope or spirit of the subject matter described herein in any way. Moreover, the above and/or proceeding examples may be combined in any suitable combination to provide further examples, except where such a combination is clearly impermissible or expressly avoided. Other features, aspects, and advantages of the subject matter described herein will become apparent from the following text and the accompanying drawings.

Further features of the present disclosure will become apparent from the following description of example embodiments with reference to the attached drawings.

### BRIEF DESCRIPTION OF THE DRAWINGS

Fig. 1 illustrates a component configuration of an image forming system.
Fig. 2 is a block diagram illustrating a functional configuration of the image forming system.
Fig. 3 illustrates how images are printed.
Figs. 4A and 4B illustrate example single-colour print patterns.
Figs. 5A and 5B illustrate example multicolour print patterns.
Figs. 6A, 6B, 6C, and 6D illustrate how print patterns are formed and read.
Fig. 7 is a flowchart illustrating a process performed by an image processing apparatus.
Fig. 8 is a flowchart illustrating an operation of generating a density non-uniformity compensation table.
Fig. 9 illustrates an example read image.
Fig. 10 illustrates an example inverted image.
Fig. 11 illustrates an example density non-uniformity compensation table.

### DETAILED DESCRIPTION

Hereinafter, embodiments will be described with reference to the drawings. It should be noted that the following embodiments do not limit the present disclosure. Furthermore, not all combinations of features described in the embodiments are essential to the solution provided by the present disclosure.

### First embodiment

### Configuration of image forming system

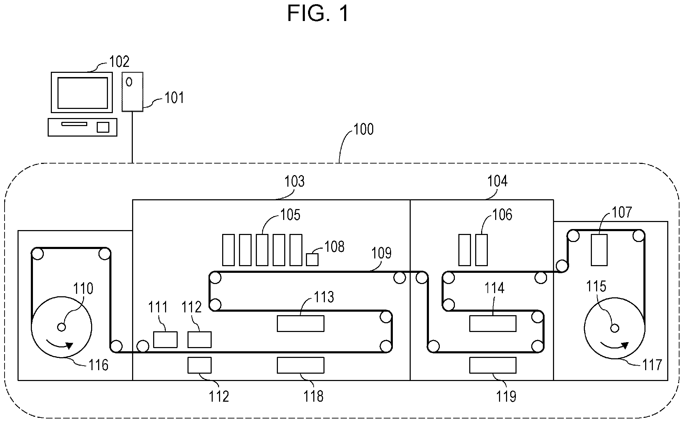

Fig. 1 illustrates an example component configuration of an image forming system according to the present embodiment. The image forming system includes an image forming apparatus 100, a controller computer 101 for controlling the image forming apparatus 100, and an operation display device 102. The image forming apparatus 100 is designed to form images on continuous paper (hereinafter referred to as roll paper) 109 that enables consecutive image formations. The image forming apparatus 100 according to the present embodiment includes a basic colour printing unit 103 for basic colour printing, a spot colour printing unit 104 for spot colour printing, a paper feeding unit 117 for transporting roll paper 109, and a paper outputting unit 116 for winding the roll paper 109. Basic colour printing in the present embodiment uses cyan (C) ink, magenta (M) ink, yellow (Y) ink, and black (K) ink. Spot colour printing in the present embodiment uses white ink. Basic colour printing and spot colour printing are not limited to the examples provided above. For example, light cyan (Lc) ink or light magenta (Lm) ink may be used for basic colour printing. Similarly, for example, a clear ink or a reaction liquid for fixing ink may be used for spot colour printing.

The paper feeding unit 117 is operable to supply the roll paper 109 to the image forming apparatus 100. The paper feeding unit 117 transports the roll paper 109, which is wound around the paper tube of the roll paper 109, through multiple rollers (for example, transport rollers and paper feeding rollers) to the image forming apparatus 100 at a constant speed by rotating the paper tube around a rotary shaft 115. The paper outputting unit 116 is operable to wind the roll paper 109, which is transported from the image forming apparatus 100, into a roll around the paper tube. The roll paper 109 can be wound around the paper tube on a rotary shaft 110 and held in the form of roll, for example, as illustrated in Fig. 1. The paper outputting unit 116 winds the roll paper 109 as a printed product, transported toward the paper tube, around the rotary shaft 110 at a constant speed through multiple rollers (for example, transport rollers and paper outputting rollers).

Before printing starts, the roll paper 109 needs to be distributed from the paper feeding unit 117 to the paper outputting unit 116.

Specifically, first, after the roll paper 109 is placed in the paper feeding unit 117, the leading end of the roll paper 109 is passed over a skew correction unit 107. The roll paper 109 is subsequently passed under an image forming unit 106 in the spot colour printing unit 104. The roll paper 109 is subsequently passed over a drying unit 114 and then over a cooling unit 119. Next, the roll paper 109 is passed under a timing mark detection unit 108 in the basic colour printing unit 103, then under an image forming unit 105, subsequently over a drying unit 113, and over a cooling unit 118.

The roll paper 109 is then passed through a scanner unit 112, subsequently under a colourimetric unit 111, and finally wound around the paper outputting unit 116. After the roll paper 109 is distributed throughout the image forming apparatus 100, an image formation job can be input to the controller computer 101 for the image forming apparatus 100. After the image formation job is input, printing can start in response to pressing a print start button on the operation display device 102.

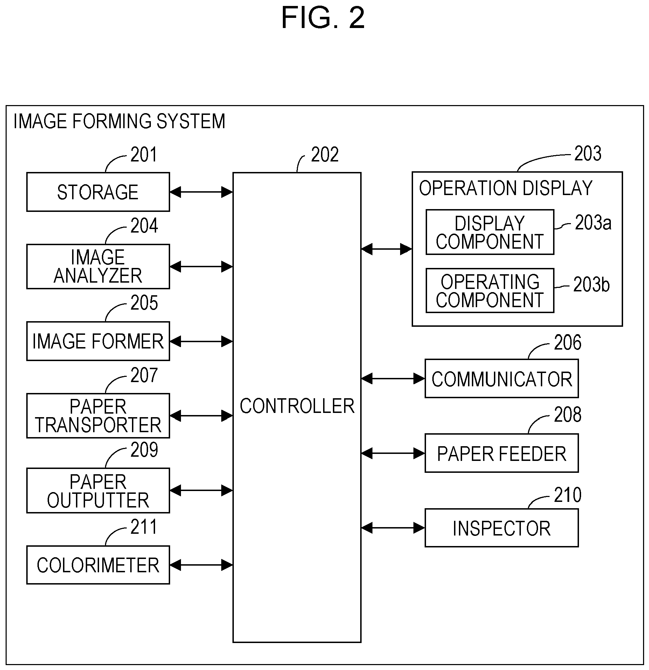

Fig. 2 is a block diagram illustrating an example of a functional configuration of the image forming system according to the present embodiment. The image forming system includes a storage 201, a controller 202, an operation display 203, an image analyzer 204, an image former 205, a communicator 206, a paper transporter 207, a paper feeder 208, a paper outputter 209, an inspector 210, and a colourimeter 211.

The storage 201 is implemented by, for example, a non-volatile semiconductor memory (e.g., flash memory), a hard disk drive (HDD), or a solid state drive (SSD). The storage 201 is operable to store various programs such as system programs and processing programs to be run by the controller 202, and various kinds of data necessary for running these programs.

The controller 202 is implemented by, for example, a central processing unit (CPU) and a random-access memory (RAM). The CPU of the controller 202 reads the various programs such as system programs and processing programs stored in the storage 201, loads the various programs onto the RAM, and performs various operations according to the loaded programs. The controller 202 is able to perform image forming operations to execute image formation jobs (hereinafter referred to as "job") in response to instructions from the user. The functions that constitute the image forming system can be controlled based on the instructions provided by the controller 202.

The operation display 203 is implemented by a liquid crystal display (LCD) with a touch panel, including a display component 203a and an operating component 203b. The display component 203a is operable to display various kinds of information on a display screen, based on the display control signals input from the controller 202. The operating component 203b includes various operational keys such as numeric keys and a start key. The operating component 203b is operable to receive various inputs from the user and output operational signals to the controller 202. The user can use the operating component 203b to configure settings such as the type of paper to be used, information of print speed, number of sheets, number of copies, print length, print weight, and print diameter, as desired.

The image analyzer 204 is operable to analyze, render, and perform screen processing on the print data to be output to convert the print data into a format that can be printed by the image forming apparatus 100. The image former 205 functions as a print controller for controlling printing of images on the roll paper 109 using the image forming units 105 and 106. The communicator 206 is implemented by a communication control card such as a local region network (LAN) card. The communicator 206 is operable to transmit and receive various kinds of data to and from external devices (for example, personal computers) connected to communication networks such as LANs or WANs.

The paper transporter 207 is operable to control the transport mechanism for transporting the roll paper 109 in the image forming apparatus 100. The paper transporter 207 transports the roll paper 109 transported from the paper feeding unit 117 through the image forming units 105 and 106 by multiple rollers to the paper outputting unit 116. The paper feeder 208 is operable to control the paper feeding unit 117. The paper outputter 209 is operable to control the paper outputting unit 116. The inspector 210 is operable to control the scanner unit 112 to check whether images are printed on printing paper without ink ejection defects. The inspector 210 checks whether there are ink ejection defects in the printed image by reading a pattern, designed for inspection of ink ejection defects printed by the image forming units 105 and 106, using the scanner unit 112. When any ink ejection defect is detected, the inspector 210 stops the image forming apparatus 100. The example described above does not limit the methods for inspection of ink ejection defects. Methods such as directly reading the printed image with a camera, scanner, or other devices to perform inspection or monitoring the conditions of ink ejected from nozzles may be used.

The colourimeter 211 functions as a colourimetry control unit for controlling the colourimetric unit 111. The colourimeter 211 is operable to perform colour measurements on a specific region of the roll paper 109, as specified by the controller 202, to acquire colour information. The colourimetric unit 111 is able to move in both the transport direction of the roll paper 109 and the direction perpendicular to the transport direction, enabling colour measurements on any region of the roll paper 109, not limited to images. The colourimetric unit 111 of the present embodiment is capable of measuring colours in a square region with each side measuring 1 cm in length and width. However, the size and shape are not limited to this example. For example, the region may be circular with a radius of 1 cm. The region may be defined solely by size or by shape. The region may be defined based on the regions specified for various colourimeter devices that can be used as the colourimetric unit 111, or may be set by the user.

In the present embodiment, the image forming apparatus 100 functions as an image processing apparatus including functional elements such as the controller 202 and the image analyzer 204. However, the controller computer 101 connected to the image forming apparatus 100 may function as the image processing apparatus. The functional configuration of the image forming system may be implemented by a single machine or by multiple machines.

### Print pattern formation

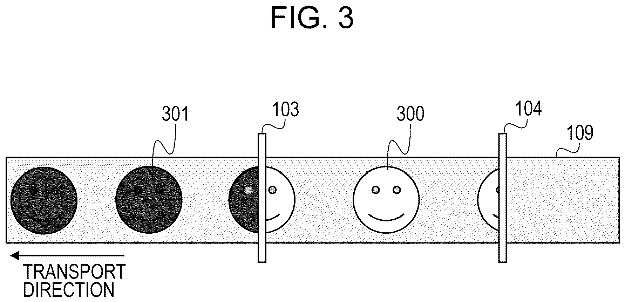

Fig. 3 illustrates how images are printed. While the roll paper 109 is continuously transported in the transport direction in Fig. 3, an image 300 is printed on the moving roll paper 109, using the image forming unit 106 of the spot colour printing unit 104. After the printed image 300 is fixed by the drying unit 114 and the cooling unit 119, an image 301 is printed by additional printing using the image forming unit 105 of the basic colour printing unit 103. Subsequently, the image 301 is fixed by the drying unit 113 and the cooling unit 118. The images 300 and 301 may be different or identical for each page.

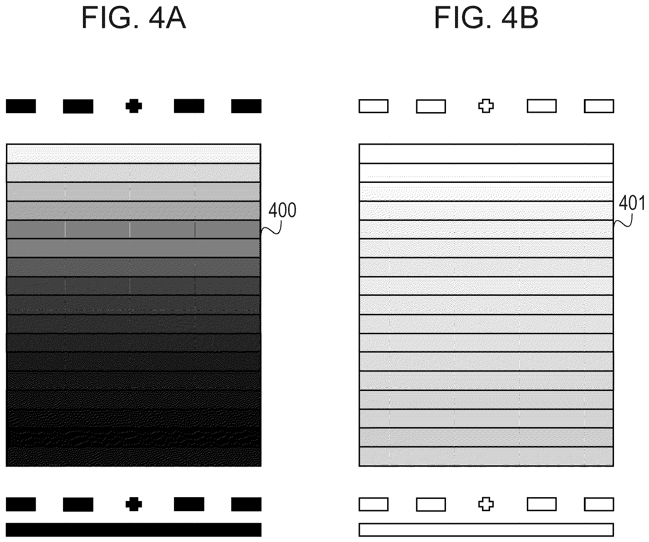

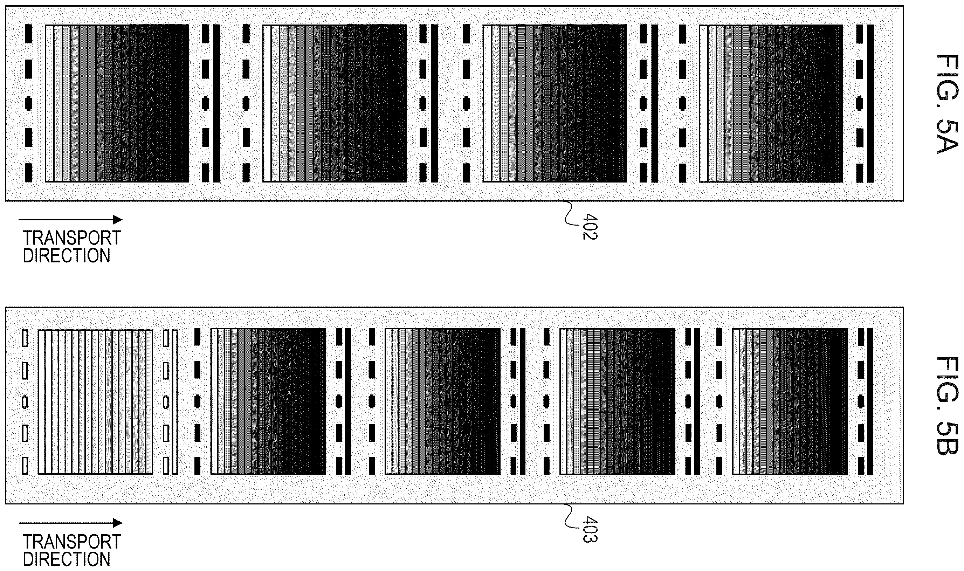

Fig. 4A and 4B illustrate an example of print patterns used to generate a density non-uniformity compensation table, which is designed to reduce non-uniform densities. Fig. 4A illustrates a single-colour pattern 400 created with a coloured ink. Fig. 4B illustrates a single-colour pattern 401 created with white ink. The single-colour patterns comprises (e.g., consists of) a gradation region containing various densities and nozzle position mark regions. The single-colour patterns are printed using the individual inks. The regions including cross marks at the top and bottom in Figs. 4A and 4B are the nozzle position mark regions. The regions in the middle in Figs. 4A and 4B are the gradation regions. The shapes and layout of the gradation region and the nozzle position mark region are not limited to the example described above. Figs. 5A and 5B illustrate an example of print outputs with the single-colour patterns illustrated in Figs. 4A and 4B repeatedly printed. Fig. 5A illustrates a print pattern 402 created with four coloured inks. Fig. 5B illustrates a print pattern 403 created with four coloured inks and white ink.

### Generation of density non-uniformity compensation table

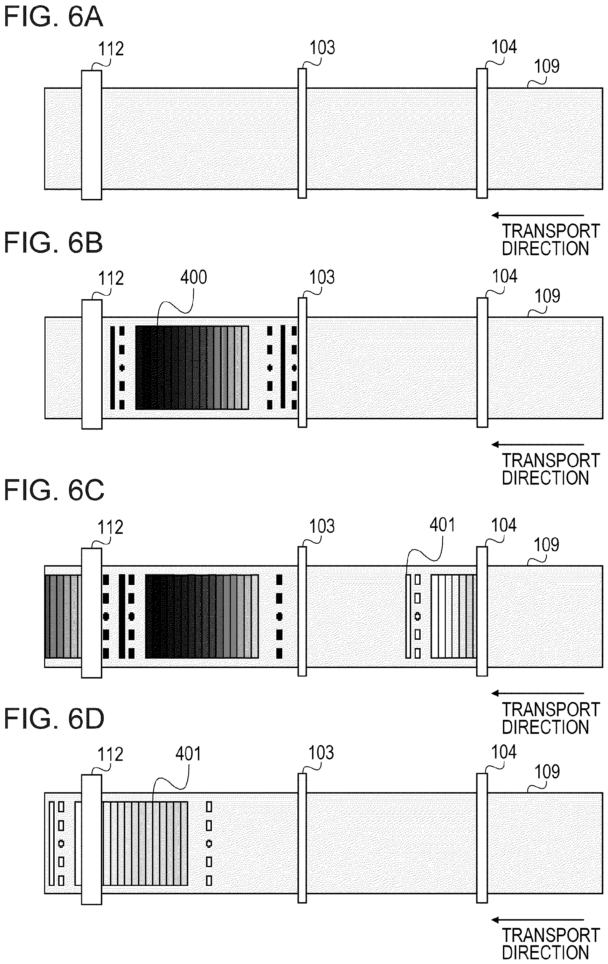

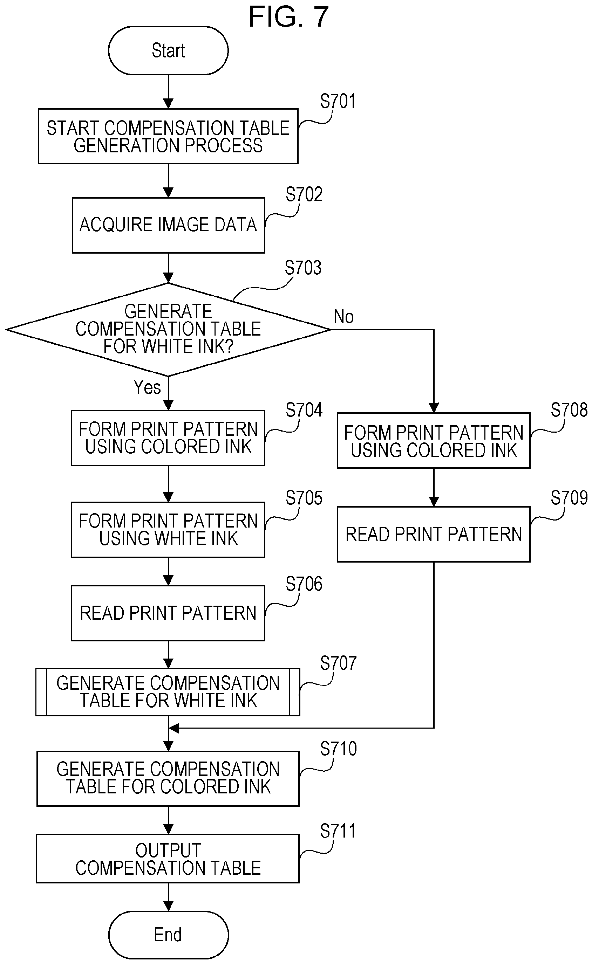

Figs. 6A, 6B, 6C, and 6D illustrate how print patterns are formed and read. Fig. 7 is a flowchart illustrating a process of density non-uniformity compensation table generation, executed by the image processing apparatus. In the present embodiment, the controller 202 of the image forming apparatus 100, which functions as the image processing apparatus, executes the process illustrated by the flowchart in Fig. 7. However, the controller including components such as a CPU of the controller computer 101 may execute the process. A portion of the process may be performed by the image forming apparatus 100, and the remainder may be performed by the controller computer 101. The process illustrated by the flowchart in Fig. 7 starts in response to an instruction input by the user via the operation display 203 and then received by the controller 202. In the following, each method step is represented by corresponding numerals starting with "S".

In S701, the controller 202 starts the process of density non-uniformity compensation table generation in the state illustrated in Fig. 6A, in response to an instruction from the user. In S702, the controller 202 acquires image data representing the print patterns corresponding to the individual inks. In S703, the controller 202 determines whether to generate a density non-uniformity compensation table for white ink.

When it is determined that a density non-uniformity compensation table for white ink is to be generated, the process proceeds to S704. When it is determined not to generate a density non-uniformity compensation table for white ink, the process proceeds to S708. In the present embodiment, the determination of whether to generate a density non-uniformity compensation table for white ink depends on whether white ink is loaded in the image forming apparatus 100. When white ink is loaded, it is determined that a density non-uniformity compensation table for white ink should be generated. Conversely, when white ink is not loaded, it is determined not to generate a density non-uniformity compensation table for white ink. Alternatively, or in addition to whether white ink is loaded, the determination may be made based on a user instruction indicating whether to generate a density non-uniformity compensation table for white ink. The determination may be made based on whether an ink that appears with low colour contrast against a recording medium such as the roll paper 109 is loaded in the image forming apparatus 100. For example, it is determined whether the colour contrast is relatively low based on the relationship between the type of recording medium to be used and the type of ink to be used. Based on this determination, whether to generate a density non-uniformity compensation table for the ink is determined. Whether the colour contrast between a specific recording medium and a specific ink is relatively small can be determined by checking whether the contrast is smaller than or equal to a threshold. The threshold may be predetermined, or input by the user via the operation display 203.

In S704, the controller 202 executes printing of coloured ink patterns for compensating for non-uniform densities on the roll paper 109 using the image forming unit 105 in the basic colour printing unit 103 and form the single-colour pattern 400 with each ink colour, as illustrated in Fig. 6B. In S705, the controller 202 executes printing of a white ink pattern for compensating for non-uniform densities on the roll paper 109 using the image forming unit 106 in the spot colour printing unit 104 and form a single-colour pattern 401 with white ink, as illustrated in Fig. 6C. The entire print patterns formed with four coloured inks and white ink in S704 and S705 correspond to the print pattern 403. In S706, the controller 202 reads the print pattern 401 using the scanner unit 112 as illustrated in Fig. 6D. The coloured-ink print patterns other than the white-ink print pattern are also sequentially read between S704 and S705 using the scanner unit 112. In S707, the controller 202 performs an operation of generating a density non-uniformity compensation table for white ink. The operation in S707 will be described below in more detail.

In S708, the controller 202 executes printing of coloured ink patterns for compensating for non-uniform densities on the roll paper 109. The printing is executed by using the image forming unit 105 in the basic colour printing unit 103 in order to form the single-colour pattern 400 with each ink colour, as illustrated in Fig. 6B. In S709, the controller 202 reads the print patterns 400 using the scanner unit 112.

In S710, the controller 202 acquires image data acquired by reading the coloured ink print patterns and generates a density non-uniformity compensation table for coloured ink. The controller 202 acquires gradation data corresponding to the position of each recording element (e.g., nozzle) included in the image forming unit 105, for each recording element, based on the print pattern represented by the image data. The gradation data represents the density characteristic of each recording element. The controller 202 generates a density non-uniformity compensation table that indicates correspondences between input colour signal values and specific signal values, based on the acquired gradation data. These specific signal values are defined to convert into ink values that represent colours indicated by the input colour signal values. In S711, the controller 202 stores the generated density non-uniformity compensation table in the storage 201. When a density non-uniformity compensation table is prestored, the density non-uniformity compensation table is updated with the newly generated density non-uniformity compensation table. The generated density non-uniformity compensation table may be output to external devices.

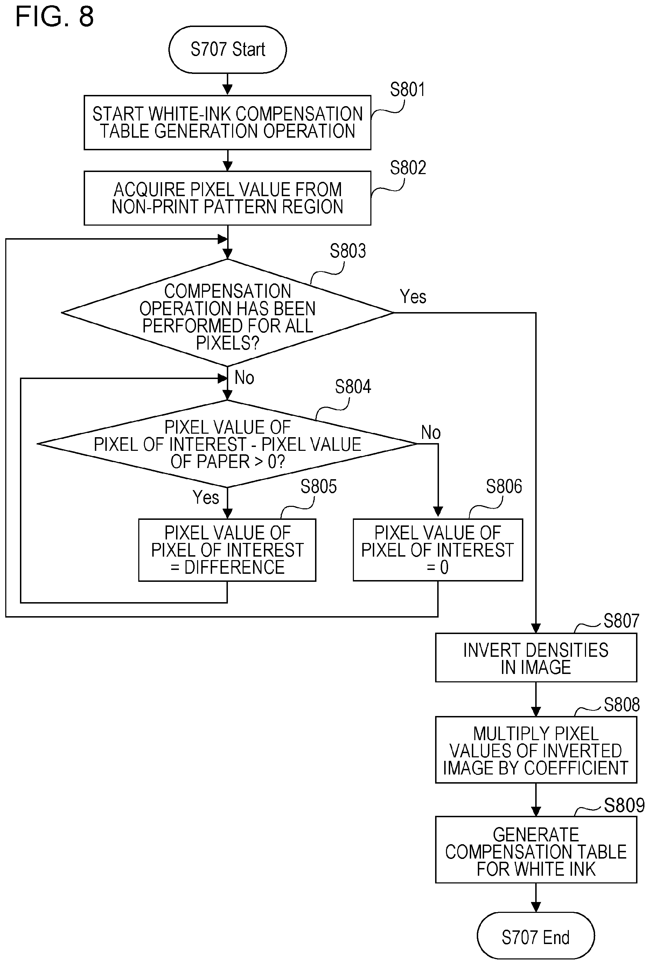

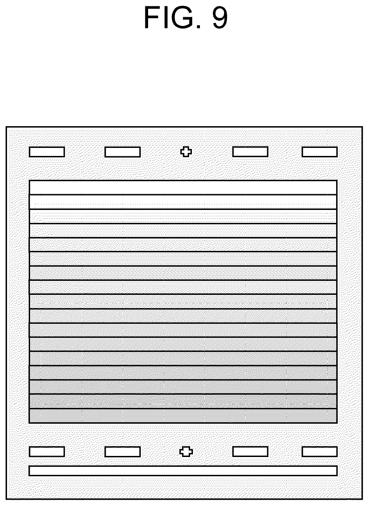

Fig. 8 is a flowchart illustrating the operation of generating a density non-uniformity compensation table for white ink in S707. In S801, the controller 202 starts the operation of generating a density non-uniformity compensation table for white ink. In S802, the controller 202 acquires image data acquired by reading a white-ink print pattern. Fig. 9 illustrates an image acquired by reading a white-ink print pattern. The controller 202 acquires the pixel value from the non-print pattern region in the image represented by the image data, where the pixel value indicates the colour (e.g., paper white) of the roll paper 109. In S803, the controller 202 determines whether a compensation operation based on the colour of the roll paper 109 has been performed for the pixel values of all pixels corresponding to the print pattern. When a compensation operation has been performed for the pixel values of all pixels, the process proceeds to S807; otherwise, the process proceeds to S804.

In S804, the controller 202 acquires the difference between the pixel value of the non-print pattern region, which indicates the colour of the roll paper 109, and the pixel value of a specific pixel of interest in the print pattern region. The controller 202 determines whether the difference is greater than 0. When the difference is greater than 0, in S805, the controller 202 retains the difference value as the post-compensation pixel value for the pixel of interest. When the difference is smaller than or equal to 0, in S806, the controller 202 retains 0 as the post-compensation pixel value for the pixel of interest.

In S807, the controller 202 performs an inversion operation that inverts the densities in the post-compensation image. In the inversion operation in S807, white and black are swapped in the image. For example, assuming that images are represented by 16-bit pixel values, and each pixel value acquired in S803 to S806 is denoted as pixVal[i] (e.g., "i" represents the pixel number), the inversion operation can be expressed as 0xffff-pixVal[i]. Specifically, the density inversion is performed by calculating the difference between the post-compensation pixel value and the maximum possible pixel value that corresponds to a bit count, which represents the number of bits in the image.

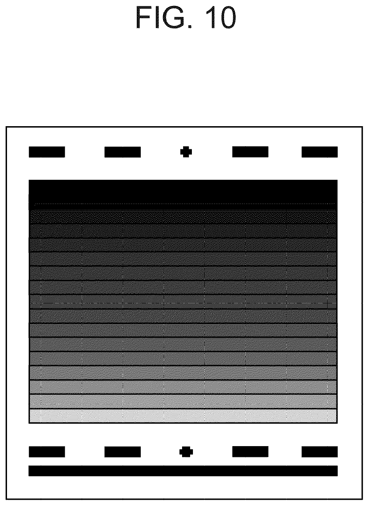

In S808, the controller 202 multiplies the pixel value of each pixel of the image after the inversion operation by a coefficient. This coefficient is used to improve the accuracy of detecting nozzle position marks. Edge detection using a differential filter is performed on the image after the inversion operation to detect nozzle position marks. As a result, regions with significant pixel-value differences can be detected. Thus, considering the influence of the noise generated during the print pattern reading in S706, the coefficient for multiplying the pixel values is set to an appropriate value (for example, 0.9). Fig. 10 illustrates an example of an inverted image acquired by performing the inversion operation on the image illustrated in Fig. 9.

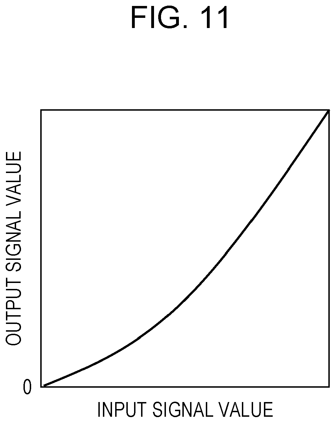

In S809, the controller 202 performs an operation of detecting nozzle position marks for white ink by edge detection using a differential filter on the image after the inversion operation. The controller 202 acquires image data, such as gradation data corresponding to each nozzle based on the detected nozzle position mark and generates density characteristic data, such as a density non-uniformity compensation table for white ink based on the gradation data. Fig. 11 illustrates the relationship between input signal values and output signal values in a density non-uniformity compensation table. The generated density non-uniformity compensation table is a one-dimensional lookup table that converts input signal values the output signal values. Fig. 11 illustrates an example of a density non-uniformity compensation table. The characteristic indicated by the density non-uniformity compensation table may vary. Other embodiments

In the embodiment described above, the scanner unit 112 is used to acquire the colour information of the roll paper 109. However, other devices such as an imaging device may be used to acquire the colour information of the roll paper 109, or the colour information may be input by the user.

In the embodiment, the roll paper 109 is used as the recording medium. However, cut paper may be used as the recording medium. Moreover, the recording medium is not limited to paper but may also include, for example, film or other material-based recording media. The paper colour is not limited to white, and may be, for example, transparent or metallic.

In the embodiment, the image forming apparatus 100 includes two printing units, specifically the spot colour printing unit 104 and the basic colour printing unit 103. However, the number of printing units is not limited to two. For example, the image forming apparatus 100 may include only the spot colour printing unit 104. The image forming apparatus 100 may include three or more printing units.

In the embodiment, white ink is used as the recording agent that hinders print pattern detection. However, the present disclosure can also be applied to other recording agents which hinder pattern detection. For example, the disclosure can be used to generate density characteristic data (e.g., a density non-uniformity compensation table) for targets such as a clear ink, a reaction liquid for fixing ink onto the recording medium, and an achromatic ink that is difficult to detect.

In the embodiment, inverted images are used to acquire image data such as the gradation data corresponding to the nozzles for white ink. However, read images before inversion may be used to acquire the gradation data, while inverted images are used to detect nozzle position marks. When the gradation region is detectable but the nozzle position mark region is too small to detect, the read image after inversion and the read image before inversion can be used separately. The user may provide an instruction through the operation display 203 to select whether the read image after inversion or the read image before inversion is to be used for print pattern detection. The user may provide an instruction to use the read image after inversion for some regions and the read image before inversion for the remaining regions.

The present disclosure enables the density non-uniformity compensation for recording agents that may hinder the detection of print patterns, without increasing printing costs.

### Other Embodiments

Embodiment(s) of the present disclosure can also be realized by a computer of a system or apparatus that reads out and executes computer executable instructions (e.g., one or more programs) recorded on a storage medium (which may also be referred to more fully as a 'non-transitory computer-readable storage medium') to perform the functions of one or more of the above-described embodiment(s) and/or that includes one or more circuits (e.g., application specific integrated circuit (ASIC)) for performing the functions of one or more of the above-described embodiment(s), and by a method performed by the computer of the system or apparatus by, for example, reading out and executing the computer executable instructions from the storage medium to perform the functions of one or more of the above-described embodiment(s) and/or controlling the one or more circuits to perform the functions of one or more of the above-described embodiment(s). The computer may comprise one or more processors (e.g., central processing unit (CPU), micro processing unit (MPU)) and may include a network of separate computers or separate processors to read out and execute the computer executable instructions. The computer executable instructions may be provided to the computer, for example, from a network or the storage medium. The storage medium may include, for example, one or more of a hard disk, a random-access memory (RAM), a read only memory (ROM), a storage of distributed computing systems, an optical disk (such as a compact disc (CD), digital versatile disc (DVD), or Blu-ray Disc (BD)^{™}), a flash memory device, a memory card, and the like.

While the present disclosure has been described with reference to example embodiments, it is to be understood that the disclosure is not limited to the disclosed example embodiments. The scope of the following claims is to encompass all such modifications and equivalent structures and functions.

## Claims

1. An image processing apparatus comprising:
an acquisition means configured to acquire image data acquired by reading an image formed on a recording medium, wherein the image is formed using a recording element for ejecting an ink; and
a generation means configured to generate data representing a density characteristic of the recording element, the data is generated based on an inverted image which is acquired by inverting densities in the image represented by the image data.

2. The image processing apparatus according to Claim 1, wherein a region printed with the ink on the recording medium exhibits relatively low contrast against a region not printed with the ink on the recording medium.

3. The image processing apparatus according to Claim 1 or 2, wherein the ink is an achromatic ink.

4. The image processing apparatus according to any one of Claims 1 to 3, wherein the ink is a white ink, a reaction liquid, or a clear ink.

5. The image processing apparatus according to any one of Claims 1 to 4, wherein the generation means is configured to generate a compensation table for performing compensation to reduce non-uniform densities, wherein the compensation table is generated based on the data representing the density characteristic of the recording element.

6. The image processing apparatus according to any one of Claims 1 to 5, wherein the image formed on the recording medium includes a gradation region comprising various densities and a mark region for specifying a position of the recording element.

7. The image processing apparatus according to any one of Claims 1 to 6, further comprising:
a calculation means configured to calculate a pixel-value difference between the region printed with the ink and the region not printed with the ink in the image represented by the image data, wherein the generation means is configured to invert densities in the image by calculating a difference between the calculated pixel-value difference and a maximum possible pixel value that corresponds to a bit count in the image data.

8. The image processing apparatus any one of Claims 1 to 7, further comprising:
a detection means configured to detect a mark region for specifying a position of the recording element in the inverted image, wherein the generation means is configured to generate the data representing the density characteristic, wherein the data is generated based on the detected mark region.

9. The image processing apparatus according to Claim 8, further comprising:
a compensation means configured to multiply a pixel value in the inverted image by a coefficient that facilitates detection of the mark region.

10. A program configured to cause a computer to operate as the image processing apparatus according to any one of Claims 1 to 9.

11. An image processing method comprising:
an acquisition step of acquiring image data acquired by reading an image formed on a recording medium, wherein the image is formed using a recording element for ejecting an ink; and
a generation step of generating data representing a density characteristic of the recording element, wherein the data is generated based on an inverted image which is acquired by inverting densities in the image represented by the image data.

12. A non-transitory computer-readable storage medium storing instructions that, when executed by a computer, cause the computer to perform an image processing method, the image processing method comprising:
an acquisition step of acquiring image data acquired by reading an image formed on a recording medium, wherein the image is formed using a recording element for ejecting an ink; and
a generation step of generating data representing a density characteristic of the recording element, wherein the data is generated based on an inverted image which is acquired by inverting densities in the image represented by the image data.
